# EUROPEAN PATENT APPLICATION

(11) **EP 4 325 641 A1**
(43) Date of publication of application: **21.02.2024**
(21) Application number: 22825345.6
(22) Date of filing: 16.06.2022
(51) Int. Cl.: H01M 50/24, H01M 50/211, H01M 50/249

(54) **BATTERY MODULE AND METHOD OF MANUFACTURING SAME**

(30) Priority: 18.06.2021 KR 20210079379; 15.06.2022 KR 20220072785
(71) Applicant: LG Energy Solution, Ltd., Seoul 07335 (KR)
(72) Inventor: LEE, Changje, Daejeon 34122 (KR); LEE, Bokgun, Daejeon 34122 (KR); PARK, Jinwoo, Daejeon 34122 (KR)
(74) Representative: Goddar, Heinz J.
(86) International application number: PCT/KR2022/008533
(87) International publication number: WO 2022/265422

(57) **Abstract**

A battery module according to an embodiment of the present disclosure includes a battery cell stack in which a plurality of battery cells are stacked in one direction, a module frame that houses the battery cell stack, and an end plate that couples to the module frame and covers the front or rear surface of the battery cell stack, wherein the module frame includes a first layer and a second layer, and the melting point of the first layer is higher than the melting point of the second layer.

## Description

### [TECHNICAL FIELD]

### Cross Citation with Related Application(s)

This application claims the benefit of Korean Patent Application No. 10-2021-0079379 filed on June 18, 2021 and Korean Patent Application No. 10-2022-0072785 filed on June 15, 2022 in the Korean Intellectual Property Office, the contents of which are incorporated herein by reference in their entirety.

The present disclosure relates to a battery module and a method of manufacturing the same, and more particularly, to a battery module having enhanced safety and a method of manufacturing the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

Meanwhile, in the case of a secondary battery used for small-sized devices, two to three battery cells are used, but in the case of a secondary battery used for a middle- or large-sized device such as an automobile, a middle- or large-sized battery module in which a large number of battery cells are electrically connected is used.

Since the middle or large-sized battery module is preferably manufactured so as to have as small a size and weight as possible, a prismatic battery, a pouch-shaped battery or the like, which can be stacked with high integration and has a small weight relative to capacity, is mainly used as a battery cell of the middle or large-sized battery module.

The battery cell mounted onto the battery module may generate a large amount of heat in the charge and discharge process. If the temperature becomes higher than an appropriate temperature due to overcharging or the like, the performance may deteriorate. If the temperature rise is excessive, there is a risk of explosion or ignition. When thermal runaway occurs in the battery module due to overcharging, and the like, the internal temperature and internal pressure of the battery module rise significantly, and thus, the module frame or end plate forming the outer surface of the battery module may be collapsed by high temperature or high pressure. When the sealed structure of the battery module is collapsed in this way, internal heat, gas, sparks, or flames are emitted to the outside, and a high-temperature battery cell or gas comes into contact with external oxygen, which may lead to a cascading thermal runaway phenomenon.

Conventionally, an attempt has been mainly made to solve these problems by filling the inner surface of the module frame with a heat-resistant shield structure, but when the heat-resistant shield structure is applied inside the battery module, there was a problem that the manufacturing cost increases, the manufacturing process becomes complicated, and the internal space of the battery module becomes narrower.

Therefore, there is a need for a technique capable of solving the above problems of the conventional techniques.

### [DETAILED DESCRIPTION OF THE INVENTION]

### [Technical Problem]

It is an object of the present disclosure to provide a battery module having improved durability and safety by preventing continuous thermal runaway phenomenon, and a method of manufacturing the same.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked in one direction, a module frame that houses the battery cell stack, and an end plate that couples to the module frame and covers the front or rear surface of the battery cell stack, wherein the module frame comprises a first layer and a second layer, and the melting point of the first layer is higher than the melting point of the second layer.

The inner surface of the module frame may include the first layer, and the outer surface of the module frame may include the second layer.

The module frame is a mono frame having a square tubular shape so that the battery cell stack can be housed inside, and the mono frame may be formed by forming a plate material into a tubular shape and then joining the two ends of the plate material.

A step part not including the first layer may be formed at a first end among the two ends, and a second end may be joined to the step part of the first end.

The step parts not including the first layer may be formed at each of the two ends, and the step parts may be engaged and joined to each other.

The module frame may include a U-shaped frame of which any one of the upper and lower surfaces is opened, and a straight cover that covers the opened surface of the U-shaped frame.

The step parts not including the first layer may be respectively formed at both ends of the U-shaped frame, and the both ends of the straight cover may be joined to the step parts.

The step parts not including the first layer may be respectively formed at both ends of the straight cover, and the both ends of the U-shaped frame may be joined to the step parts.

The first step parts not including the first layer may be respectively formed at both ends of the U-shaped frame, the second step parts not including the first layer may be respectively formed at both ends of the straight cover, and the first step parts and the second step parts may be respectively engaged and joined.

Any one of the U-shaped frame and the straight cover may not include the first layer as a whole.

The module frame may include two U-shaped frames.

The both ends of the two U-shaped frames may be joined in a mutually opposed manner to form one surface of the module frame.

The both ends of each of the two U-shaped frames may further include flange parts extending to the outside of the module frame, respectively, the flange parts may not include the first layer, and the flange parts of the two U-shaped frames may be joined to each other.

Any one of the two U-shaped frames may not include the first layer as a whole.

The first layer may have a melting point of 1000°C or higher.

A thermal conductivity of the first layer may be lower than a thermal conductivity of the second layer.

A specific gravity of the first layer may be larger than a specific gravity of the second layer. A thickness of the first layer and a thickness of the second layer may be different.

A ratio of the thickness of the first layer to that of the second layer may be 1:5 to 1:30.

The thickness of the first layer may be 0.1 to 0.3 mm.

The thickness of the second layer may be 1.5 to 3.0 mm.

The first layer may include stainless steel, and the second layer may include aluminum, gold, silver, copper, platinum, or an alloy containing them.

The first layer and the second layer may be coupled through an atomic diffusion joining.

At least one of the edges of the module frame may be formed through a joining process, and a joint part formed through the joining process may be present in the second layer of the edge.

According to one embodiment of the present disclosure, there is provided a method of manufacturing a battery module, which comprises the steps of: forming a module frame that houses the battery cell stack, and coupling the module frame and an end plate, wherein the step of forming the module frame comprises: cutting a metal plate; molding the cut metal plate into a predetermined shape; partially removing one end of the metal plate; and joining one end of the metal plate to the other end of the metal plate or one end of the other metal plate, wherein the module frame comprises a first layer and a second layer, and a melting point of the first layer is higher than a melting point of the second layer.

According to one embodiment of the present disclosure, there is provided a battery pack comprising at least one battery module described above.

### [Advantageous Effects]

According to embodiments of the present disclosure, the battery module of the present disclosure includes a module frame that can withstand high temperature and high pressure, thereby capable of maintaining its shape even at the time of ignition inside the battery module, and preventing a cascading thermal runaway phenomenon.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery module according to an embodiment of the present disclosure;
Fig. 2 is an exploded perspective view of the battery module according to Fig. 1;
Fig. 3 is a cross-sectional view taken along the line A-A of Fig. 2;
Fig. 4 is a diagram showing the structure of a module frame according to an embodiment of the present disclosure;
Fig. 5 is a diagram for explaining a method of manufacturing a module frame according to an embodiment of the present disclosure;
Fig. 6 is another diagram for explaining a method of manufacturing a module frame according to an embodiment of the present disclosure; and
Fig. 7 is another diagram for explaining a method of manufacturing a module frame according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Below, a battery module according to an embodiment of the present disclosure will be described.

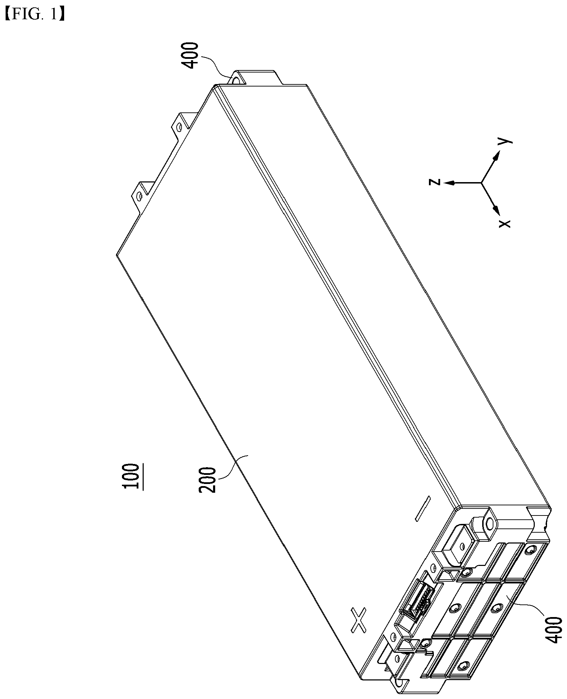

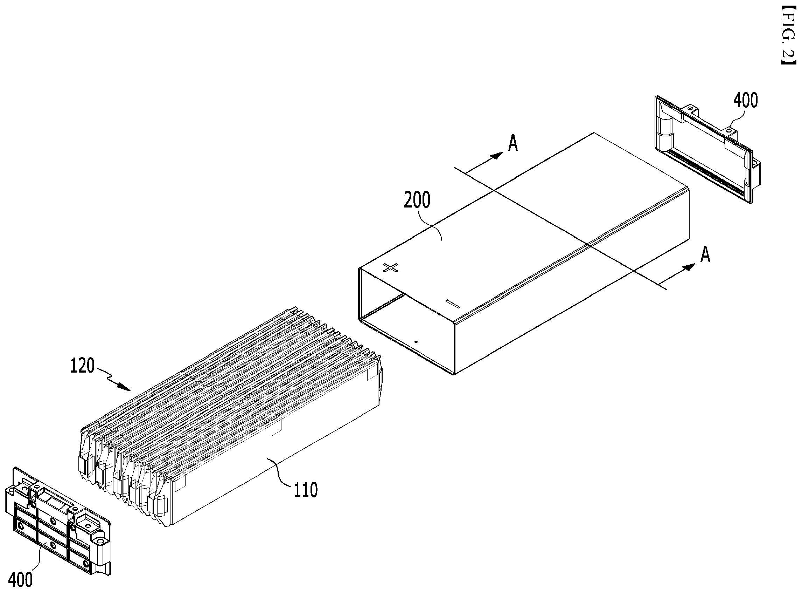

Fig. 1 is a perspective view showing a battery module according to an embodiment of the present disclosure. Fig. 2 is an exploded perspective view of the battery module according to Fig. 1.

Referring to Figs. 1 and 2, the battery module 100 according to an embodiment of the present disclosure may include a battery cell stack 120 in which a plurality of battery cells 110 are stacked along one direction, a module frame 200 that houses the battery cell stack 120, and end plates 400 that cover the front surface and/or the rear surface of the battery cell stack 120.

The battery cells 110 according to the present embodiment may be provided in a pouch type in which the number of stacked units per unit area can be maximized, but this is not always the case, and it is also possible to be provided in a cylindrical shape in the form of a prismatic or jelly roll type.

The module frame 200 according to the present embodiment can be for protecting the battery cell stack 120 and the electrical components connected thereto from external physical impacts. The module frame 200 may house the battery cell stack 120 and the electric components connected thereto in the inner space of module frame 200. Here, the module frame 200 includes an inner surface and an outer surface, and the inner space of the module frame 200 may be defined by the inner surface.

Here, on the basis of Fig. 1, the module frame 200 may have two surfaces facing each other on the z-axis and two surfaces facing each other on the y-axis, wherein the two surfaces facing each other on the z-axis are referred to as an upper surface (+z-axis direction) and a bottom surface (-z-axis direction), and the two surfaces facing each other on the y-axis may be referred to as a side surface. Further, the two surfaces facing each other on the z-axis are referred to as surfaces on the z-axis, and the two surfaces facing each other on the y-axis may be referred to as surfaces on the y-axis.

The end plate 400 according to the present embodiment seals the opened surface of the module frame 200, whereby it can be for protecting the battery cell stack 120 and the electrical equipment connected thereto from external physical impacts. The structure of the module frame 200 may be provided into an opened hollow shape along the longitudinal direction of the battery cell stack 120, and the front surface and the rear surface of the battery cell stack 120 may not be covered by the module frame 200. The front surface and the rear surface of the battery cell stack 120 may be covered by the end plate 400 and the like, whereby the front surface and the rear surface of the battery cell stack 120 may be protected from external physical impacts and the like. For this purpose, the end plate 400 may be made from a material having a predetermined strength. For example, the end plate 400 may include a metal such as aluminum.

Meanwhile, the module frame 200 may be mainly made from a metal having high thermal conductivity for heat dissipation of the battery module 100, and examples of the metal used for the module frame 200 may be aluminum, gold, silver, copper, platinum, or an alloy containing them.

These metals have excellent thermal conductivity even while satisfying the stiffness level required by the battery module 100, and thus are mainly used as a material for the module frame 200, but there is a problem that its shape is collapsed at the time of ignition inside the battery module 100 and a thermal runaway phenomenon can be promoted. Specifically, when a thermal runaway phenomenon occurs inside the battery module 100, its internal temperature may be 1000°C or 1200°C or higher, while the melting point of aluminum is at a level of 660°C, and thus, it is difficult to maintain the external shape of the battery module 100 at the time of internal ignition.

In order to improve the heat resistance of the module frame 200, the module frame 200 can also be made, for example, from steel or stainless steel with a melting point of 1400°C or higher, or the like. However, when the module frame 200 is made from steel, the weight of the module frame 200 increases, which causes a problem that not only the weight reduction of the battery module 100 cannot be achieved, but also the thermal conductivity of steel is lower than that of aluminum, and thus, the heat dissipation performance of the battery module 100 is lowered.

Therefore, the module frame of the present disclosure designed to solve the above-mentioned problem will be described below.

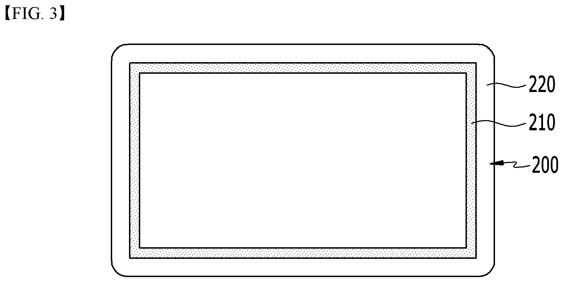

Fig. 3 is a cross-sectional view taken along the line A-A of Fig. 2.

Referring to the section A-A of the module frame 200 shown in Fig. 3, the module frame 200 of the present embodiment may include a first layer 210 and a second layer 220. The first layer 210 may be stacked on one surface of the second layer 220. The second layer 220 may be stacked on one surface of the first layer 210. The present disclosure is not limited to that shown in Fig. 3, and includes the case in which a part of the module frame 200 includes any one of the first layer 210 and the second layer 220.

When the direction from the inner surface toward the outer surface of the module frame 200 is referred to as a first direction, the second layer 220 may be located in the first direction of the first layer 210. When the direction from the outer surface toward the inner surface of the module frame 200 is referred to as the second direction, the first layer 210 may be located in the second direction of the second layer 220. In the module frame 200, the first layer 210 may be located closer to the inner surface of the module frame 200 than the second layer 220, and the second layer 220 may be located closer to the outer surface of the module frame 200 than the first layer 210. The second layer 220 may be located outside the first layer 210. In the module frame 200, the first layer 210 forms an inner surface of the module frame 200, and the second layer 220 may form an outer surface of the module frame 200.

The first layer 210 and the second layer 220 included in the module frame 200 may have different physical properties from each other. For example, the first layer 210 may be made from a material having higher heat resistance than the second layer 220. When the first layer 210 is formed of a material with high heat resistance, the battery module 100 can maintain its shape even at the time of internal ignition, and therefore, it is possible to prevent the phenomenon that oxygen flows into the battery module 100 due to the collapse of the module frame 200, or gas or sparks are transmitted to the other battery modules 100. Therefore, considering the internal ignition of the battery module 100, the first layer 210, which is provided with a material having high heat resistance, preferably forms the inner surface of the battery module 100 or is located close to the inner surface. In another example, the second layer 220 may be made from a material having a unit weight or specific gravity smaller than that of the first layer 210, whereby the total weight of the module frame 200 may be slightly reduced. Further, the second layer 220 may be made from a material having a higher thermal conductivity than the first layer 210, whereby the heat dissipation performance of the module frame 200 can be supplemented.

The first layer 210 of the module frame 200 may be made from a material having a higher melting point than the second layer 220. The first layer 210 of the module frame 200 may include a material whose shape is maintained even under a temperature of 1000°C or 1200°C. The first layer 210 of the module frame 200 may include a material whose shape is maintained even under a pressure of 2 bar or more. It may be preferable that the first layer 210 provided with a material whose shape is maintained even in such a high temperature and high-pressure environment forms the inner surface of the battery module 100 or is located close to the inner surface. In a specific example, the first layer 210 may include stainless steel. In a specific example, the first layer 210 may include STS4xx, STS304, STS316, or other steel-based materials.

The first layer 210 of the module frame 200 may have a thickness of 0.1 to 0.3 mm. Here, when the thickness of the first layer 210 is less than 0.1 mm, it may be difficult to ensure the heat resistance of the module frame 200. Further, if the thickness of the first layer 210 is larger than 0.3mm, the total weight of the module frame 200 may be increased, and the overall thermal conductivity of the module frame 200 may appear to be somewhat low. Further, if the manufacturing cost of the first layer 210 is somewhat high, increasing the thickness value of the first layer 210 may also cause a problem that the manufacturing cost of the module frame 200 increases.

The second layer 220 of the module frame 200 may be made from a material having higher thermal conductivity than the first layer 210. The thermal conductivity of the second layer 220 may be variable depending on its thickness, but may be 20 W/mk, 50 W/mk, 100 W/mk, or 150 W/mk or more.

The second layer 220 of the module frame 200 may be made from a light material having a unit weight, that is, a specific gravity smaller than that of the first layer 210. For example, the second layer 220 may include aluminum, gold, silver, copper, platinum, or an alloy containing them. In a specific example, the second layer 220 may include A3xxx, A5xxx, A6xxx, or other aluminum. Since the specific gravity of aluminum is about 2.7, the difference can be about 1/3 times from that of steel having a specific density of 7.7 or more.

The thickness of the second layer 220 of the module frame 200 may be 1.5 to 3.0 mm. Here, if the thickness of the second layer 220 is less than 1.5mm, it is difficult to ensure the overall stiffness of the module frame 200, and if the thickness is larger than 3.0mm, the overall thickness of the module frame 200 may be increased more than necessary.

In this manner, the module frame 200 of the present embodiment further includes the first layer 210 as compared with the module frame 200 having only the second layer 220, and therefore, can have improved heat resistance or corrosion resistance, and the like. At this time, if the first layer 210 forms the inner surface of the module frame 200 or is located close to the inner surface, the effect due to the first layer 210 may increase more remarkably. In addition, the module frame 200 of the present embodiment further includes the second layer 220 as compared with the module frame 200 having only the first layer 210, whereby the specific gravity can be reduced, the thermal conductivity can be improved, and the overall manufacturing cost can be reduced. Further, since the stiffness and heat resistance of the module frame 200 are improved as described above, the battery module 100 of the present embodiment can minimize the use of an additional heat-resistant member, and may not require a separate heat-resistant structure.

Meanwhile, the module frame 200 has been mainly described above as having two layers, but this is not always the case, and the module frame 200 may be provided as having three or more layers. Therefore, the first layer 210 and the second layer 220 may be coupled without a separate layer interposed between the two layers, but this is not always the case, and the first layer 210 and the second layer 220 may be coupled so as to include a separate layer interposed between the two layers. Further, a separate layer located in the first direction or the second direction of the first layer 210 or the second layer 220 may be further added to the first layer 210 or the second layer 220.

Further, the above description has been made based on a configuration in which the module frame 200 is provided with two layers as a whole, but this description does not exclude that the module frame 200 is partially provided with two layers. A configuration in which the module frame 200 partially includes two layers should also be construed as being included in the subject matter of the present disclosure. As will be described later, when the module frame 200 is formed by coupling a plurality of sub-frames, only a part of the plurality of sub-frames are made from a material having two layers, and the rest of the plurality of sub-frames may be made from a material having a single layer.

The module frame 200 of the present embodiment may be made from a clad metal material including the first layer 210 and the second layer 220. The clad metal may commonly refer to a material in which a metal or non-ferrous metal layer is used as a parent layer and another metal or non-ferrous metal material is joined together on one surface or both surfaces thereof in order to add new characteristics that the parent material does not have. By joining two metals with different physical properties, the respective advantages are maintained and the respective disadvantages are complemented with each other, so that the function of the clad metal can be further improved over the function that respective metals have.

The clad metal may be formed by methods such as welding, rolling, casting, extrusion, or the like. The clad metal may include at least two metal layers, wherein since at least two metal layers are joined through atomic diffusion bonding, it may be more difficult to peel than to be coupled via an adhesive or the like. In addition, in the case of dissimilar joining metals via clad metal, the two metal layers do not peel well even when bent or external force is applied, and the joining strength thereof may be further improved over time.

Meanwhile, in order to manufacture the module frame 200 including two metals having different physical properties from each other, it may be possible to use a coating process. Specifically, the inner surface of the module frame 200 formed of the material of the second layer 220 is coated with the material of the first layer 210, so that a module frame 200 including two layers can be manufactured. However, considering the narrow internal space of the module frame 200, coating the inner surface of the module frame 200 is difficult, and if it is even possible, it is difficult to form a uniform coating layer. In addition, since various components including the battery cell stack 120 are arranged in the inner space of the module frame 200, in the process of inserting them into the module frame 200, the above-mentioned coating layer may be damaged. When the module frame 200 including two layers is manufactured through the coating process in this way, cracks occur during the process in which other members are housed in the internal space of the module frame 200 during the process of forming the coating layer or after the coating layer is formed. At the time of ignition inside the battery module 100, through these cracks, heat or pressure is transferred to the outer layer of the module frame 200, that is, the second layer 220, whereby the module frame 200 may be collapsed and thus, it may be difficult to ensure the durability of the module frame 200 manufactured by the coating process.

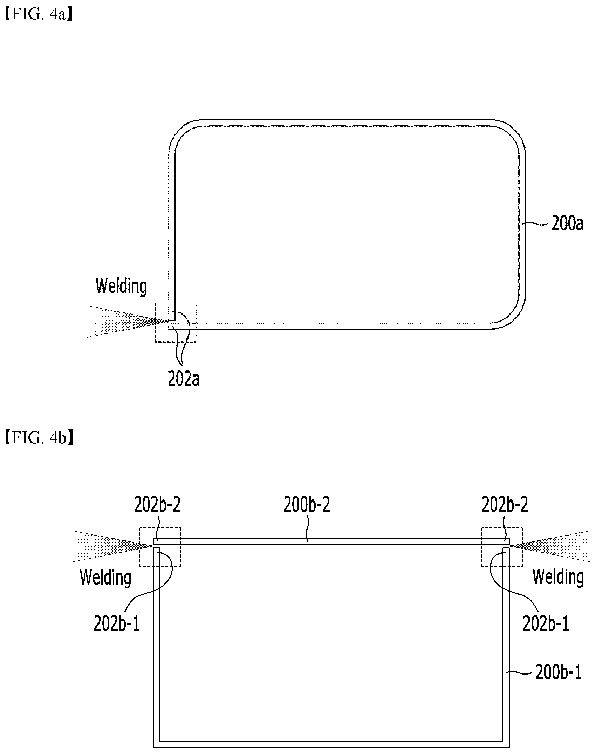

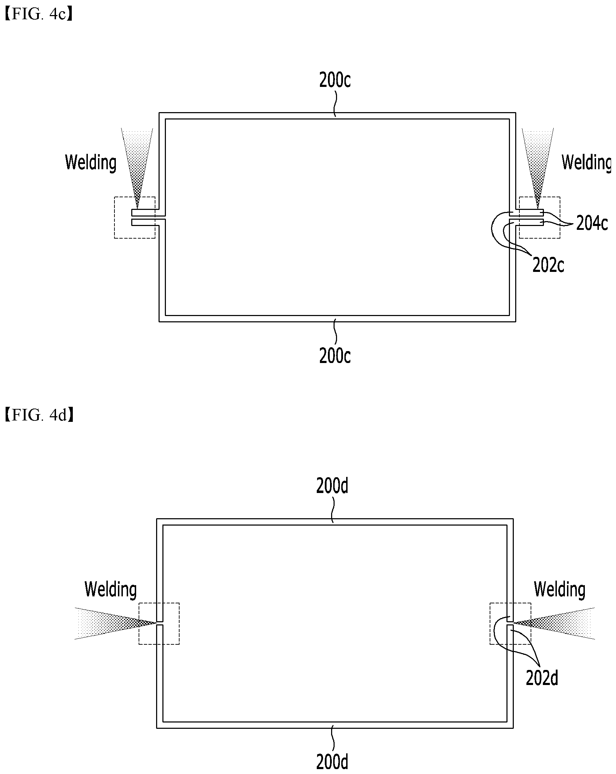

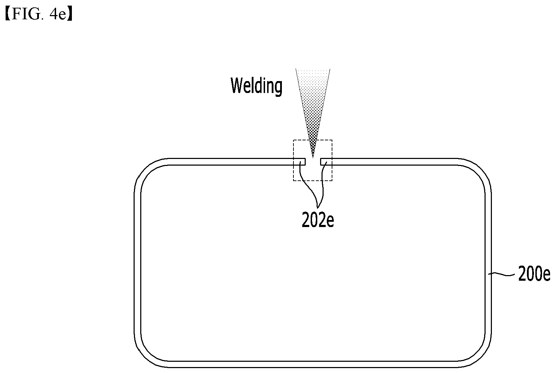

Fig. 4 is a diagram showing the structure of a module frame according to an embodiment of the present disclosure.

Referring to the cross section of the module frame 200 shown in Fig. 4, the structure of the module frame 200 may vary.

As an example, the module frame 200 may be a roll press type mono frame 200a as shown in Fig. 4(a). It may be provided with a structure in which a metal plate is formed in a hollow square tubular shape so as to house the battery cell stack, and abutting both ends 202a of the metal plate can be provided in a vertically joined structure.

In another example, the module frame 200 may be provided with a structure in which a U-shaped frame 200b-1 of which the front, rear and upper surfaces are opened, and a straight upper frame 200b-2 are coupled as shown in Fig. 4(b). The U-shaped frame may be formed by forming a U-shaped metal plate through a forming process. The U-shaped frame 200b-1 has a lower surface (bottom surface) and both side surfaces, and couples with the upper frame 200b-2, so that the opened upper surface of the U-shaped frame can be covered. The U-shaped frame 200b-1 and upper frame 200b-2 can be joined by a joining process in a state in which the corresponding ends 202b-1 and 202b-2 are in vertical contact with each other. Further, in the opposite case of Fig. 4(b), it can be provided with a structure in which a U-shaped frame having opened front, rear and lower (bottom) surfaces and a straight lower frame are coupled. Similarly, the U-shaped frame and the upper frame can be joined by a joining process in a state in which the corresponding ends are in vertical contact with each other. For convenience, the drawings are omitted, and other details can be described in the same manner as the vertically symmetrical drawing of Fig. 4(b).

In the other example, the module frame 200 may have a structure in which two U-shaped frames 200c are coupled as shown in Fig. 4(c). A flange part 204c may be formed at both ends 202c of the two U-shaped frames 200c, and the two U-shaped frames 200c may be coupled by joining the flange portions 204c. That is, the flange parts on both sides of the upper U-shaped frame and the corresponding flange parts 204c on both sides of the lower U-shaped frame can be joined by the joining process in a state of being in contact with each other in an opposed manner. The lengths of the flange part of the upper U-shaped frame and the flange part of the lower U-shaped frame may be the same as or different from each other. The flange part 204c may not include the first layer.

Similarly, even in Fig. 4(d), it may have a structure in which two U-shaped frames 200d are coupled. In Fig. 4 (d), it does not include a flange part unlike Fig. 4(c), and both ends 202d of the two U-shaped frames 200d can be coupled by a joining process in a state of facing each other and being in contact. That is, both ends of the upper U-shaped frames and the corresponding opposite ends of the lower U-shaped frames may be coupled by a joining process in a state of facing each other and being in contact with each other. Thereby, the corresponding both ends 202d of the upper U-shaped frames and the lower U-shaped frames may be located on one surface of the module frame 200, and the joining surface formed by joining the corresponding both ends 202d may also be located on one surface of the module frame.

Referring to Fig. 4(e), the module frame 200 may be a roll press type mono frame 200e. It can be provided with a structure in which a metal plate is formed in a hollow square tubular shape so as to house the battery cell stack, and abutting both ends of the metal plate are joined. At this time, the two ends of the molded metal plate may be located on one surface of the module frame, and the joining surface formed by joining the two ends may also be located on one surface of the module frame.

The structure of the module frame 200 may be provided in various shapes in addition to the above-mentioned examples, and may be provided with an L-shaped frame structure or various structures not described.

Here, in the forming process, any conventional method and apparatus can be used as long as the metal plate can be formed in a tubular shape or a U-shaped shape, and one example thereof may be a press process. In addition, the coupling may follow any conventional method as long as the joining state can be firmly maintained, and examples thereof include laser welding, plasma welding, and TIG welding. In the structure of each module frame 200 shown in Fig. 4, the joining position is indicated by 'welding'. Although the welding part is shown as having an interval in Fig. 4, it has a module frame shape as shown in Fig. 3 after being joined by welding.

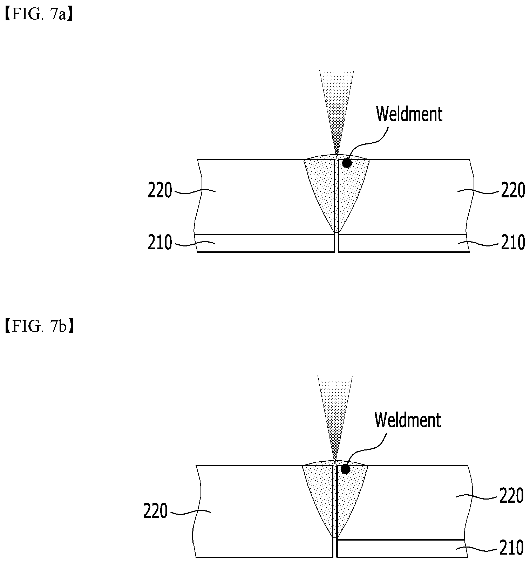

Further, here, when the module frame 200 is formed by coupling two or more sub-frames as shown in Figs. 4(b), 4(c) and 4(d), a plurality of sub-frames may be all made from a metal plate having two or more layers as in Fig. 7(a), but this is not always the case, and at least one of the plurality of sub-frames is made of a metal plate having two or more layers, as in Fig. 7(b), and the rest of the plurality of sub-frames may be made of a metal plate having a single layer. Fig. 7(b) shows the case in which the single-layer plate shown on the left is made of the second layer 220, and the thickness of the second layer 220 is larger than the thickness of the first layer 210 in the two-layer plate shown on the right. However, the present disclosure is not limited thereto, and a single-layer plate is made of the first layer 210, and in the two-layer plate, the thickness of the first layer 210 may be larger than the thickness of the second layer 220.

Meanwhile, in manufacturing the module frame 200 in the shape as shown in Fig. 4, it can be somewhat difficult to join a metal material having a plurality of layers having different physical properties. All metals with different melting points are exposed on the cross section of the metal plate, and thus, when the two ends are joined using a welding process, which is a conventional joining method, it may be difficult for the layers existing at both ends to completely join each other. Therefore, in manufacturing the module frame 200 of the present embodiment, it may be desirable to perform the joining process after at least one of the plurality of layers present at the two ends has been removed.

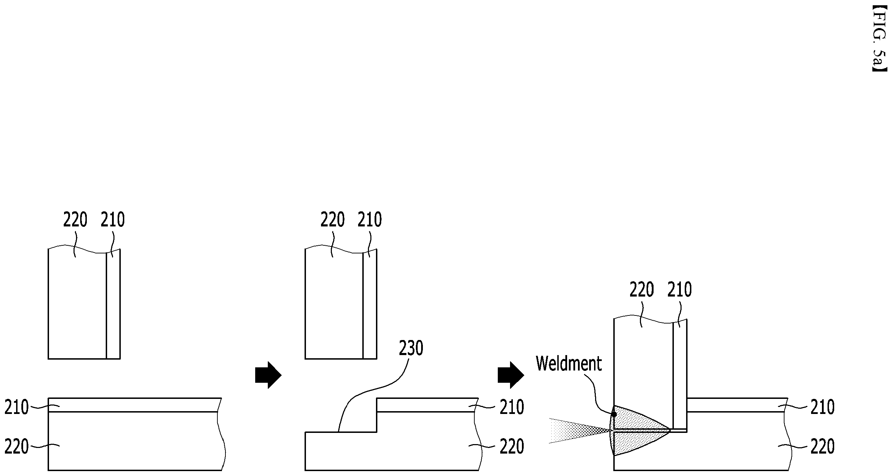

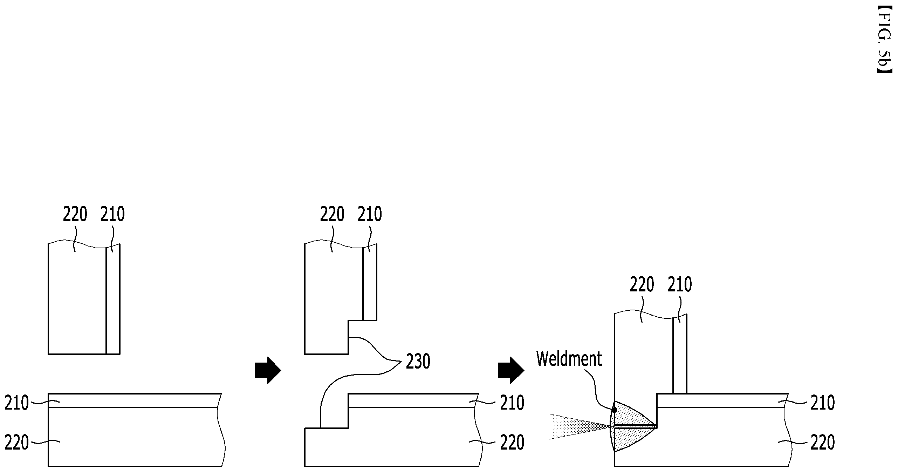

More specifically, referring to Figs. 4(a), 4(b), 5(a) and 5(b), when the two ends of one or two metal plates form a corner, the first layer 210 and the second layer 220 located at each end meet vertically each other, so that one of the first layer 210 or the second layer 220 having different physical properties is removed for the joint. Fig. 5 is a diagram for explaining a method of manufacturing a module frame according to an embodiment of the present disclosure. Referring to Figs. 5(a) and 5(b), one corner of the module frame 200 can be formed by coupling two ends of the metal plate or sub-frame. Here, at least one of the two ends coupled to each other through the joining process may be partially removed, and after being removed, it can be joined to the other end to form a corner of the module frame 200. At this time, the one edge may be formed by coupling the edge of one surface on the z-axis and the edge of one surface on the y-axis, and the module frame 200 of Fig. 4(a) includes at least one corner formed through the above-mentioned coupling, and the module frame 200 of Fig. 4(b) may include at least two corners formed through the above-mentioned coupling.

In the embodiment of Fig. 5(a), a step part 230 is formed by removing the first layer 210 from one end of the two ends of the metal plate, and the other end is joined to a step part 230 of one end. In addition, the case in which the second layers 220 of the two ends of the metal plate are joined to each other is shown.

In the embodiment of Fig. 5 (b), a step part 230 is respectively formed by removing the first layer 210 from the two ends of the metal plate, wherein the step part 230 of the other end is joined to the step part 230 of one end. Further, the case in which the second layers 220 of the two ends of the metal plate are joined to each other is shown.

Specifically, in mutually coupling the two ends of the metal plate or metal frame for the manufacture of the module frame 200, since each layer of the two ends is arranged perpendicular to each other, the first layer 210 at one of the two ends may have to couple with both the first layer 210 and the second layer 220 at the other end. Further, when heat is applied to the first layer 210 and the second layer 220 for joining between them, the first layer 210 and the second layer 220 are melted together, whereby compounds between the materials forming each layer are precipitated, which may make it difficult to form a joining surface. For example, when the first layer 210 includes Fe and the second layer 220 includes Al, the precipitated compound may be an Al-Fe compound.

However, as shown in Fig. 5(a), when at least one first layer 210 of the two ends is removed, the second layers 220 of each end come into contact with each other, so that the two ends can be relatively easily coupled by joining the second layer 220 having a relatively low melting point. At this time, a step part may be formed at one of the two ends through the removal of the first layer 210, and the position of the two ends is fixed through the step part, so that subsequent joining processes can be made easier. In Fig. 5, it is shown that not only the first layer 210, but also the second layer 220 is somewhat removed, but this is not always the case, and the part to be removed may be designed differently depending on the appropriate size of the step part and various reasons in the process.

Here, the joining process for coupling the two ends may be performed at a position where the second layers 220 of the two ends are in contact with each other. A heat source such as a laser beam may be provided for joining the two ends, wherein the direction of providing a heat source may be a direction parallel to the joining surface in which the two ends are in contact with each other. Further, the direction of providing the heat source may be a direction forming a first angle with the joining surface in which the two ends are in contact with each other. Here, the first angle may be 30 degrees or less, or 15 to 30 degrees or less. The joining surface may be formed between the second layer 220 at the two ends. Specifically, a joining surface may be formed by bringing the second layer 220 exposed at one end surface of the two ends into contact with the second layer 220 at the other end exposed through the removal process. In the module frame 200, the parts that are joined to each other by being melted by a heat source may be referred to as a joining part. A joining part may be formed in the second layer 220. The joining part may be formed in the step part. The joining part may have a shape in which a radial cross section is reduced in a direction in which the heat source is provided. The axial cross-sectional shape of the joining part is shown as 'weldment' in Fig. 5.

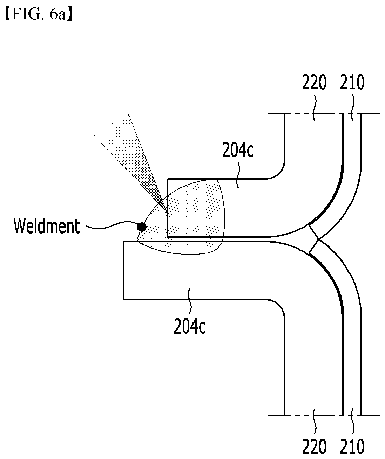

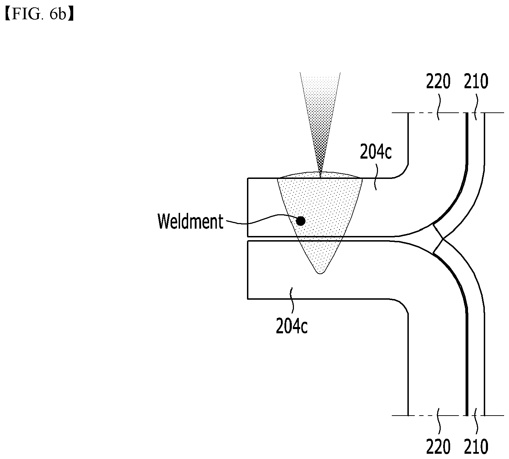

Meanwhile, the above description has been made on the basis of a configuration in which when the structure of the module frame 200 is formed, the first layer 210 is removed from one of the two ends that are in contact with each other, and then the two ends are joined, but this is equally applied to the case of joining after removing the first layer 210 from both ends as shown in Fig. 5(b). Fig. 6 is another diagram for explaining a method of manufacturing a module frame according to an embodiment of the present disclosure.

Referring to Fig. 6, the module frame 200 may be formed by coupling the flange parts 204c included in the two U-shaped frames as shown in Fig. 4(c).

Specifically, in mutually coupling the two flange parts 204c for the manufacture of the module frame 200, the two flange parts 204c may be arranged so that the first layer 210 located on the inner surface is in contact with each other. In order to couple the two flange parts 204c, a heat source must be applied to the first layer 210 through the second layer 220 located on the outer surface, but it can be very difficult to couple the first layer 210 with a different melting point through the second layer 220. In addition, when a heat source is applied to a metal plate having two layers, the first layer 210 and the second layer 220 are melted together, so that compounds between the materials forming each layer are precipitated, and accordingly, it may be difficult to form a joining surface.

However, when the first layer 210 of the two flange parts 204c is removed as shown in Fig. 6, the second layer 220 comes into contact with each other, so that the two flange parts 204c can be coupled relatively easily through the joining process of the second layer 220.

Here, the joining process may be performed at a portion in contact with the second layer 220. Referring to Fig. 6(a), the lengths of the flange parts 204c of the U-shaped frame facing each other may be different. At this time, the heat source may be provided in a direction forming an acute angle with the direction from one flange part toward the other flange part. Further, referring to Fig. 6(b), the lengths of the flange parts 204c of the U-shaped frame facing each other may be the same. In this case, a heat source such as a laser beam used in the joining process may be provided in a direction from one flange part to the other flange part.

The joining surface may be formed between the second layer 220 of the two flange parts 204c. A joining part may be formed in the second layer 220. The shape of the joining part may vary depending on the direction in which the heat source is provided. Specifically, the joining part may have a shape in which a radial cross section is reduced along a direction in which the heat source is provided. The axial cross-sectional shape of the joining part is shown as 'weldment' in Fig. 6.

Meanwhile, in the description of Figs. 5 and 6, the configuration in which the first layer 210 is formed on the inner surface of the end or flange part of the metal plate is mainly described, but depending on the design, the end or flange part of the metal plate may include three or more layers, and in addition to the second layer 220, at least one additional layer located in the first direction or the second direction of the first layer 210 may be further included. Therefore, in such a case, the above-mentioned removal process should be properly performed so as to remove only the first layer 210, or to remove at least one or more of the above-described additional layers as well as the first layer 210 in consideration of the melting point or location of the additional layer.

Fig. 7 is another diagram for explaining a method of manufacturing a module frame according to an embodiment of the present disclosure.

Referring back to Figs. 4(d) and 4(e), the two ends of the metal plate may be joined to form one surface. That is, the two ends are coupled by facing each other's cross-sections on the same plane. At this time, the first layer 210 of one end of the two ends of the metal plate may be joined with the first layer 210 of the other end, and the second layer 220 at one end may be coupled to the second layer 220 at the other end. Therefore, even without the removal process described in Figs. 5 and 6, the two ends of the metal plate may be joined through a joining process as shown in Fig. 7(a). Here, the joining of the two ends may be formed through joining of the second layer 220 located at each end.

Here, the ends of the metal plates coupled to each other may have two layers, respectively, as in Fig. 7(a), and as shown in Fig. 7(b), one may have one layer and the other may have two layers. Even when at least one of the two ends is formed as a single layer, the two ends may be coupled by joining the second layer 220 in which the two ends are in contact with each other.

Further, when forming a hollow square tubular shape by bending one metal plate in Figs. 4(a) and 4(d), the bendable part (i.e., the corner of the module frame) may be bent in a round shape, and may be bent at a right angle. Similarly, when forming a U-shaped frame by bending one metal plate in Figs. 4(b), 4 (c) and 4(e), the bendable part (i.e., the corner part of the module frame) may be bent in a round shape, or may be bent at a right angle.

Next, a method of manufacturing a battery module according to an embodiment of the present disclosure will be described.

The manufacturing method (S1000) of the battery module 100 according to the present embodiment may include, a step of forming a module frame 200 that houses the battery cell stack 120 (S 1 100), and a step of coupling the module frame 200 and an end plate 400 (S1200).

Wherein, the step of forming a module frame 200 that houses the battery cell stack 120 (S 1100) may include a step of forming the module frame 200 and a step of mounting the battery cell stack 120 to the module frame 200, and these steps may be performed together. Specifically, when the module frame 200 is formed by coupling a plurality of sub-frames, the step of forming the module frame 200 for housing the battery cell stack 120 (S1100) may include a step of providing one frame, a step of mounting the battery cell stack on the one frame, and a step of coupling the one frame and the other frame to form the module frame 200.

Next, the method of manufacturing a module frame according to an embodiment of the present disclosure will be described.

The manufacturing method (S2000) of the module frame 200 according to the present embodiment may include:
a step of cutting a metal plate (S2100);
a step of molding the cut metal plate into a predetermined shape (S2200);
a step of removing a part of the end of the metal plate to form a step part (S2300); and
a step of joining the ends of the metal plate (S2400).

Here, when the module frame 200 is formed in the same way as in Fig. 7, the step S2300 may be omitted.

Next, the manufacturing method (S2000) of the module frame 200 according to the present embodiment will be described with reference to Fig. 4. The contents described below may include all the contents of Figs. 3 to 7 described above, and may be understood more concretely by the above description.

As an example, in the case of the module frame 200 of Fig. 4(a), the metal plate is cut to a predetermined size and shape (S2100), and the cut metal plate may be formed into the shape of a square tube (S2200). Through the molding of the metal plate, the module frame 200 may have a bottom surface, two side surfaces facing each other, and an upper surface. Meanwhile, by forming the metal plate in a tubular shape, the two ends 202a of the metal plate can be in contact with each other, and by joining them, the roll press type module frame 200a may be formed. At this time, as described in Fig. 5, at least one of the two ends 202a may be partially removed for easy coupling of the two ends 202a (S2300). A step part 230 is formed in at least one of the two ends 202a through a removal process, whereby by partially removing the first layer 210, the second layer 220 of the two ends 202a can be in contact with each other, and the two ends 202a may be coupled to each other through step (S2400). Here, a heat source may be provided in the joining process of the step of joining one end and the other end of one metal plate (S2400). The heat source used in the joining process is mainly provided in a direction parallel to the joining surface of the two ends or in a direction forming an acute angle with the joining surface, whereby the shape of the joining part may be determined.

As another example, in the case of the module frame 200 of Fig. 4 (b), the metal plate is cut into predetermined dimensions and shapes so as to be respectively manufactured into the U-shaped frame 200b-1 and the straight frame 200b-2 (S2100), and one of the cut metal plates may be formed into a U-shape (S2200). A U-shaped frame having either one of the lower or upper surface and both side surfaces may be formed through the forming of a metal plate, and the hollow module frame 200 may be formed by coupling both ends of the U-shaped frame 200b-1 and both ends of the straight frame 200b-2. Specifically, the two side ends 202b-1 of the U-shaped frame 200b-1 may be coupled to the y-axis top ends 202b-2 of the straight upper frame 200b-2. As described above, at least one of the end 202b-1 of the U-shaped frame and the end 202b-2 of the straight upper frame may be partially removed (S2300). Through this, the second layers 220 present at each end may come into contact with each other. By joining one end of one metal plate and one end of the other metal plate (S2400), the second layers 220 of each end may be coupled to each other. At this time, through the removal process (S2300), a step part may be formed in at least one of the end of the U-shaped frame and the end of the straight upper frame.

In another example, in the case of the module frame 200 of Fig. 4 (c), the metal plate is cut to a predetermined size and shape (S2100), and the cut metal plate may be formed into two U-shaped frames (S2200). The U-shaped frame 200c has a bottom surface and both side surfaces, and the module frame 200 may be formed by coupling the two U-shaped frames 200c. At this time, both ends 202c of the U-shaped frame, specifically, the ends 202c of both side surfaces may be provided with flange part 204c, and the two U-shaped frames can be coupled by joining the flange parts 204c to each other. The flange part 204c may be a portion extending in a vertical direction from one surface of the U-shaped frame, that is, a side surface. The flange parts 204c respectively located in the two U-shaped frames are arranged such that the first layers 210 face each other, and the second layers 220 are in contact with each other through the step of removing the first layer 210 (S2300). It may be coupled to each other through the step of joining one end of one metal plate and one end of the other metal plate (S2400). At this time, the heat source used in the joining process of step (S2400) may be provided. The heat source may be provided in a direction from one flange part to the other flange part, or at an acute angle thereto, whereby the shape of the junction may be determined.

For the module frame 200 of Fig. 4(d), refer to the description of Fig. 4 (c). However, both ends 202d of the two U-shaped frames 200d of Fig. 4(d) can be coupled instead of the flange part 204c of Fig. 4(c) to form a module frame 200. For the module frame 200 of Fig. 4(e), refer to the description of Fig. 4(a). However, the two ends 202e of the metal plate on one surface of the module frame 200 are joined to face each other.

Meanwhile, the metal plate described above may include at least two layers, and may also include the first layer 210 and the second layer 220 described above. In addition, the metal plate including at least two layers may be a multiple joining metal plate manufactured by a cladding method.

On the other hand, when two or more sub-frames are coupled to form the module frame 200 as shown in Figs. 4(b), 4(c), and 4(d), a part of the plurality of sub-frames may be provided as a multiple joining metal plate, and the rest of the plurality of sub-frames may be provided as a single metal plate. At this time, the single metal plate may be composed of only the second layer 220. Further, at this time, the portion removed in the step (S2300) may be the first layer 210 formed on one end of the multiple joining metal plate, and the second layer 220 exposed through the removal process of the first layer 210 may be in contact with a single metal plate, and two ends in contact with each other may be coupled to each other through a step (S2400).

Meanwhile, the above-mentioned battery module 100 can be included in a battery pack. The battery pack includes one or more battery modules according to the present embodiment, and may have a structure in which a battery management system (BMS) and a cooling device that control and manage battery's temperature, voltage, etc., are packed together.

The battery module or the battery pack including the same can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

100: battery module
110: battery cell
120: battery cell stack
200: module frame
210: first layer
220: second layer
230: step part
300: busbar frame
400: end plate

## Claims

1. A battery module comprising:
a battery cell stack in which a plurality of battery cells are stacked in one direction,
a module frame that houses the battery cell stack, and
an end plate that couples to the module frame and covers a front or rear surface of the battery cell stack,
wherein the module frame comprises a first layer and a second layer, and
a melting point of the first layer is higher than a melting point of the second layer.

2. The battery module according to claim 1, wherein:
an inner surface of the module frame comprises the first layer, and
an outer surface of the module frame comprises the second layer.

3. The battery module according to claim 1, wherein:
the module frame is a mono frame having a square tubular shape so that the battery cell stack can be housed inside, and the mono frame is formed by forming a plate material into a tubular shape and then joining two ends of the plate material.

4. The battery module according to claim 3, wherein:
a step part not including the first layer is formed at a first end among the two ends, and a second end is joined to the step part of the first end.

5. The battery module according to claim 3, wherein:
step parts not including the first layer are formed at each of the two ends, and the step parts are engaged and joined to each other.

6. The battery module according to claim 1, wherein:
the module frame comprises a U-shaped frame of which any one of the upper and lower surfaces is opened, and a straight cover that covers the opened surface of the U-shaped frame.

7. The battery module according to claim 6, wherein:
step parts not including the first layer are respectively formed at both ends of the U-shaped frame, and
both ends of the straight cover are joined to the step parts.

8. The battery module according to claim 6, wherein:
step parts not including the first layer are respectively formed at both ends of the straight cover, and
both ends of the U-shaped frame are joined to the step parts.

9. The battery module according to claim 6, wherein:
first step parts not including the first layer are respectively formed at both ends of the U-shaped frame,
second step parts not including the first layer are respectively formed at both ends of the straight cover, and
the first step parts and the second step parts are respectively engaged and joined.

10. The battery module according to claim 6, wherein:
any one of the U-shaped frame and the straight cover does not include the first layer as a whole.

11. The battery module according to claim 1, wherein:
the module frame includes two U-shaped frames.

12. The battery module according to claim 11, wherein:
both ends of each of the two U-shaped frames are joined in a mutually opposed manner to form one surface of the module frame.

13. The battery module according to claim 11, wherein:
both ends of each of the two U-shaped frames further include flange parts extending to the outside of the module frame, respectively,
the flange parts do not include the first layer, and
the flange parts of the two U-shaped frames are joined to each other.

14. The battery module according to claim 11, wherein:
any one of the two U-shaped frames does not include the first layer as a whole.

15. The battery module according to claim 1, wherein:
the first layer has a melting point of 1000°C or higher.

16. The battery module according to claim 1, wherein:
a thermal conductivity of the first layer is lower than a thermal conductivity of the second layer.

17. The battery module according to claim 1, wherein:
a specific gravity of the first layer is larger than a specific gravity of the second layer.

18. The battery module according to claim 1, wherein:
a thickness of the first layer and a thickness of the second layer are different.

19. The battery module according to claim 1, wherein:
a ratio of the thickness of the first layer to that of the second layer is 1:5 to 1:30.

20. The battery module according to claim 1, wherein:
the thickness of the first layer is 0.1 to 0.3 mm.

21. The battery module according to claim 1, wherein:
the thickness of the second layer is 1.5 to 3.0 mm.

22. The battery module according to claim 1, wherein:
the first layer comprises stainless steel, and the second layer comprises aluminum, gold, silver, copper, platinum, or an alloy containing them.

23. The battery module according to claim 1, wherein:
the first layer and the second layer are coupled through an atomic diffusion bonding.

24. The battery module according to claim 1, wherein:
at least one of the edges of the module frame is formed through a joining process, and a joint part formed through the joining process is present in the second layer of the edge.

25. A method of manufacturing a battery module, which comprises the steps of:
forming a module frame that houses the battery cell stack, and
coupling the module frame and an end plate,
wherein the step of forming the module frame comprises:
cutting a metal plate;
molding the cut metal plate into a predetermined shape;
partially removing one end of the metal plate; and
joining one end of the metal plate to the other end of the metal plate or one end of the other metal plate,
wherein the module frame comprises a first layer and a second layer, and a melting point of the first layer is higher than a melting point of the second layer.

26. A battery pack comprising at least one battery module as set forth in claim 1.
